# EUROPEAN PATENT APPLICATION

(11) **EP 2 677 249 A1**
(43) Date of publication of application: **25.12.2013**
(21) Application number: 12173209.3
(22) Date of filing: 22.06.2012
(51) Int. Cl.: F24J 2/07

(54) **Heat receiver tube with a diffusion barrier layer**

(71) Applicant: Siemens Concentrated Solar Power Ltd., 99107 Beit Shemesh (Industrial Area West) (IL)
(72) Inventor: Barkai, Menashe, 69440 Tel Aviv (IL); Gette, Alexander, 96581 Jerusalem (IL)
(74) Representative: Maier, Daniel Oliver

(57) **Abstract**

A heat receiver tube (1) for absorbing solar energy and for transferring absorbed solar energy to a heat transfer fluid is described. The heat transfer fluid can be located inside a core tube (10) of the heat receiver tube. The core tube (10) of the heat receiver tube comprises a core tube surface (101) to which at least one optical function layer (13,14) is attached. Between the core tube surface (101) and the optical function layer (13,14) a diffusion barrier layer (12) is arranged such that a diffusion of a core tube material of the core tube (10) into the optical function layer (13,14) and/or a diffusion of an optical function layer material of the optical function layer (13,14) into core tube (10) are inhibited. By the diffusion barrier layer (12) a diffusion of a material of the adjacent layers through the diffusion barrier layer (12) is blocked.

## Description

### BACKGROUND OF THE INVENTION

### 1. Field of the invention

This invention relates to a heat receiver tube and the method for manufacturing the heat receiver tube. Moreover, a parabolic trough collector and use of the parabolic through collector are provided.

### 2. Description of the related art

A sun energy collecting unit of a sun field power plant based on the concentrated solar power technique is for instance a parabolic trough collector with parabolic mirrors and a heat receiver tube. The heat receiver tube is arranged in a focal line of the mirrors. By sunlight reflecting surfaces of the mirrors the sunlight is focused to the heat receiver tube, which is filled with a heat transfer fluid, e.g. a thermo-oil or molten salt. Via the heat receiver tube the energy of the sunlight is coupled into the heat transfer fluid. Solar energy is converted to thermal energy. In order to minimize a loss of thermal energy, the heat receiver tube comprises an envelope out of a glass tube. The glass tube, which is transparent for the sunlight, is arranged coaxially around an inner tube of the heat receiver tube, in which the heat transfer fluid circulates. The space between the inner tube and the glass tube is evacuated.

An efficiency with which solar energy can be coupled into the heat transfer fluid is influenced by optical characteristics of the core tube of the heat receiver tube. These optical characteristics are α (absorption integration over solar spectrum) and ε (emissivity integrated over relevant infra red spectrum). In the relevant temperature range (400C°-500C°) α has to be as high as possible whereas ε has to be as low as possible. These optical characteristics should be stable at high temperature (up to 550C) over a long time period of more than 20 years.

### SUMMARY OF THE INVENTION

It is an object of the invention to provide a heat receiver tube with a core tube that comprises stable optical characteristics. These optical characteristics should be maintained at high temperature (up to 550C) for more than 20 years.

It is another object of the invention to provide a method for manufacturing the heat receiver tube.

Further objects of the invention are the providing of a parabolic trough collector with the heat receiver tube and the providing of a use of the parabolic trough collector.

These objects are achieved by the invention specified in the claims.

A heat receiver tube for absorbing solar energy and for transferring absorbed solar energy to a heat transfer fluid, which can be located inside a core tube of the heat receiver tube is provided. The core tube of the heat receiver tube comprises a core tube surface to which at least one optical function layer is attached. Between the core tube surface and the optical function layer a diffusion barrier layer is arranged such that a diffusion of a core tube material of the core tube into the optical function layer and/or a diffusion of an optical function layer material of the optical function layer into core tube are inhibited. By the diffusion barrier layer a diffusion of a material of the adjacent layers through the diffusion barrier layer is blocked. For instance, the diffusion barrier layer is directly attached to the core tube material.

Additionally a method for manufacturing the heat receiver tube is provided. The method comprises following steps: a) Providing core tube with an uncovered core tube surface, b) Attaching the diffusion barrier layer to the uncovered core tube surface and c) Attaching the optical function layer to the diffusion barrier layer.

Moreover a parabolic trough collector comprising at least one parabolic mirror having a sunlight reflecting surface for concentrating sunlight into a focal line of parabolic mirror and at least one above described heat receiver tube which is arranged in the focal line of the parabolic mirror.

Finally a use of the parabolic trough collector in a power plant for converting solar energy into electrical energy is disclosed.

The core tube material can comprise various metals or mixtures of various metals (alloys). Preferably the core tube comprises stainless steel. Stainless steel or components of the stainless steel are the core tube material.

The optical function layer influences decisively the optical characteristics of the core tube of the heat receiver tube.

The optical characteristics are mainly α and/or ε. For instance, the optical function layer is an infrared light reflecting coating with low emissivity in the infrared light spectrum or an selective absorption coating with a high absorptivity for solar radiation.

In a preferred embodiment the optical function layer comprises an infrared light reflecting layer which is directly arranged to the diffusion barrier layer. No additional diffusion barrier layer is arranged between the infrared light reflecting layer and diffusion barrier layer. But in principle, at least one additional diffusion barrier layer can be arranged between the infrared light reflecting layer and the diffusion barrier layer, too

In a further preferred embodiment the optical function layer comprises a selective solar coating. In order to maximize the transfer of sunlight into thermal energy and in order to reduce the thermal loss due to emissivity of energy in IR region, a solar energy absorptive coating (selectively absorptive coating) is attached to a surface of the infrared light reflecting layer, which averted to the diffusion barrier layer.

The solar energy absorptive coating absorbs the absorption radiation of the sunlight. Additionally the solar energy absorptive coating inhibits an emissivity for infrared radiation and therefore reduces additionally the loss of thermal energy. Therefore in a preferred embodiment the optical function layer comprises an infrared light reflecting layer and a selective solar coating. The solar energy absorptive coating is attached to a surface of the infrared light reflecting layer which is averted to the diffusion barrier layer.

Preferably the diffusion barrier layer comprises at least one composite material with at least one dielectric matrix material and with metal particles with at least one metal, wherein the metal particles are distributed in the dielectric matrix material The metal particles are mixed in the dielectric matrix material. Preferably the metal particles are partially oxidized and/or nitrified. The metal particles comprise a P(x)-metal. P(x)-metal is the partially oxidized (or partially nitrified) and metal with 0 < x <1 for denoting the oxidation (nitrification) level.

P(x)-metal is achieved by selected reactive sputtering. Variable P(x)x-metal could be achieved while working between fully oxidized metal while working on oxide mode (x=1) and fully metallic while working in metallic mode (x=0), Preference of oxidation level optimized according to limitation of production machine.

Preferably the dielectric matrix material comprises at least one inorganic compound selected from the group existing of aluminum oxide (Al₂O₃), aluminum nitride (A1N), zirconium dioxide (ZrO₂), zirconium nitride (2rN), titanium dioxide (TiO₂) or titanium nitride (TiN). Mixtures of these inorganic compounds are possible as well as other inorganic compounds or mixtures thereof.

Using RF for dielectric oxide (or nitride) and DC for metallic, fully metallic mode activated in order to increase diffusion barrier layer thickness and hence improve temperature durability.

For oxide (or nitride) reactive DC sputtering, it is preferred to activate metallic mode close to transition mode for oxide and transition mode close to poisoned mode for nitrides

Preferably a metal comprises at least one element, which is selected from the group consisting of titanium, zirconium and aluminum. Other metals or alloys of different metals are possible, too.

In a preferred embodiment a mass percentage of the Px-metal particles (filling factor, FF) in the composite material is selected from the range from 40 wt% to 90 wt% and preferably from the range from 50 wt% to 80 wt%. For instance, the mass percentage of the metal particles in the composite material is 50 wt%.

A mass percentage of the dielectric matrix material in the composite material is preferably selected from the range from 60 wt% to 10 wt%. The composite material can just consist of the dielectric matrix material and the metal. But the composite material can comprise additional materials.

The thickness of the diffusion barrier layer can vary. It can be selected out of a wide range. The thickness can be selected due to manufacturing procedures and/or due to its blocking function. In a preferred embodiment the diffusion barrier layer comprises a diffusion barrier layer thickness, which is selected from the range from 100 nm to 300 nm and preferably selected from the range from 100 nm to 250 nm. These ranges for the diffusion barrier layer thickness are meaningful due to manufacturing procedures and due to the blocking function of the diffusion barrier layer.

In principle, a special material for the infrared light reflecting layer is not necessary. But in a preferred embodiment the infrared reflection layer comprises a metal, which is selected from the group existing of copper Aluminum, gold and silver. These metals result in a very efficient infrared light reflecting layer.

For additional improvements of its thermal characteristics the heat receiver tube comprises an envelope with a glass tube. The above described heat receiver tube is coaxially arranged in an interior of the glass tube. The glass tube has a high transmission capability for the absorption radiation of the sunlight, which is absorbed by the heat receiver tube. The interior of the glass tube is preferably evacuated. Due to the evacuation of the interior of the glass tube nearly no convection takes place. The heat loss due to convection is nearly eliminated.

For the attaching the diffusion barrier layer and/or for the attaching the infrared light reflecting layer a thin film deposition technique is used. The thin film deposition technique is selected from the group consisting of atomic layer deposition, chemical vapor deposition and physical vapor deposition. Preferably a sputtering is used as a physical vapor deposition. More preferably the sputtering is carried out with the aid of a DC power supply. A DC sputtering, MF reactive sputtering or Dual magnetron is carried out. This has the advantage that the sputtering can be done for targets width up to 4.5 meters in order to coat tubes 4 meter length (in contrast to RF sputtering).

Preferably for the attaching the diffusion barrier layer comprises following further steps: d) Attaching metallic precursor material of the inorganic matrix material to the core tube surface and e) converting the attached metallic precursor material into the inorganic matrix material. The attaching involves at least two steps. Alternatively, the inorganic matrix material can be directly attached. The step of converting can be left.

### BIEF DESCRIPTION OF THE DRAWINGS

Further features and advantages of the invention are produced from the description of an exemplary embodiment with reference to the drawings. The drawings are schematic.
Figure 1 shows a cross section of a heat receiver tube from the side.
Figure 2 shows a cross section of a parabolic through collector with the heat receiver tube.

### DETAILED DESCRIPTION OF THE INVENTION

Given is a heat receiver tube 1 for absorbing solar energy and for transferring absorbed solar energy to a heat transfer fluid which can be located inside 103 a core tube 10 of the heat receiver tube. The core tube consists of a core tube wall 102 with steel.

A diffusion barrier layer 12 is directly attached to a core tube surface 101 of the core tube 10. This diffusion barrier layer comprises a composite material. A dielectric matrix material of the composite material is aluminum oxide. In this dielectric matrix material partially oxidized Px-metal consisting of titanium partially oxidized are distributed. The mass percentage of the Px-metal in the composite material is 50 wt%. The diffusion barrier layer thickness 101 is about 250 nm.

In order to improve the thermal characteristics a solar energy absorptive coating 14 is attached to a surface 131 of the infrared light reflecting layer 13, which is averted to the diffusion barrier layer 12.

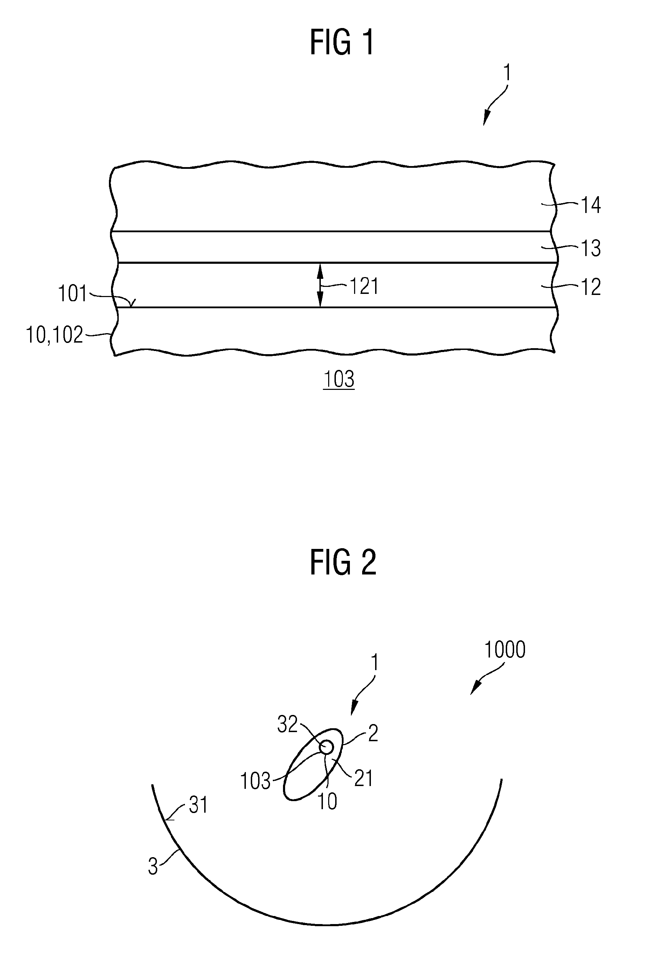

The heat receiver tube is enveloped in a glass tube 2 with a glass tube wall (figure 2). The glass tube wall is transparent for the absorption radiations with a transmission of more than 90%. The space 21 between the glass tube wall and the inter tube with the above described layer stack tube is evacuated. A gas pressure is less then 10⁻³ mbar.

For the manufacturing of the heat receiver tube following steps are carried out: a) providing core tube with an uncovered core tube surface, b) attaching the diffusion barrier layer to the uncovered core tube surface and c) attaching the infrared light reflecting layer to the diffusion barrier layer.

For the attaching the diffusion barrier layer and for attaching the infrared light reflecting layer DC sputtering or MF DC sputtering is carried out.

The heat receiver tube 1 is part of a parabolic trough collector 1000. The parabolic trough collector 1000 comprises at least one parabolic mirror 3 with a sunlight reflective surface 31. By the reflective surface 31 sunlight is concentrated in the focal line 32 of the parabolic mirror 3. The concentrated sunlight is absorbed by the heat receiver tube 1.

The parabolic trough collector is used in a solar power plant for converting solar energy into electrical energy. The heated heat transfer fluid is used to produce steam via a heat exchanger. The steam is driving a turbine, which is connected to a generator. The generator produces electrical energy.

## Claims

1. Heat receiver tube (1) for absorbing solar energy and for transferring absorbed solar energy to a heat transfer fluid, which can be located inside a core tube (10) of the heat receiver tube (1), wherein
- the core tube (10) comprises a core tube surface (101) to which at least one optical function layer is attached; and
- between the core tube surface (101) and the optical function layer a diffusion barrier layer (12) is arranged such that a diffusion of a core tube material of the core tube (10) into the optical function layer (13, 14) and/or a diffusion of an optical function layer material of the optical function layer (13, 14) into core tube (10) are inhibited.

2. Heat receiver tube according to claim 1, wherein the core tube (10) comprises stainless steel.

3. Heat receiver tube according to claim 1 or claim 2, wherein the optical function layer comprises an infrared light reflecting layer (13) which is directly arranged to the diffusion barrier layer (12).

4. Heat receiver tube according to claim 1 or 2, wherein the optical function layer comprises a selective solar coating (14).

5. Heat receiver tube according claim 4, wherein
- the optical function layer comprises an infrared light reflecting layer (13) and a selective solar coating (14) and
- the solar energy absorptive coating (14) is attached to a surface (131) of the infrared light reflecting layer (13) which is averted to the diffusion barrier layer (12).

6. Heat receiver tube according to one of the claims 1 to 5, wherein
- the diffusion barrier layer (12) comprises at least one composite material with at least one dielectric matrix material and with metal particles with at least one metal and
wherein
- the metal particles are distributed in the dielectric matrix material.

7. Heat receiver tube according to claim 6, wherein the metal particles are at partially oxidized and/or nitrified

8. Heat receiver tube according to claim 6 or 7, wherein the dielectric matrix material comprises at least one inorganic compound selected from the group existing of aluminum oxide, aluminum nitride, zirconium dioxide, zirconium nitride, titanium dioxide and titanium nitride.

9. Heat receiver tube according to one of the previous claims, wherein the metal comprises at least one element that is selected from the group consisting of titanium, zirconium and aluminum.

10. Heat receiver tube according to one of the previous claims, wherein a mass percentage of the metal in the composite material is selected from the range form 40 wt% to 90 wt% and preferably from the range from 50 wt% to 80 wt%.

11. Heat receiver tube according to one of the previous claims, wherein the diffusion barrier layer (12) comprises a diffusion barrier layer thickness (121) that is selected from the range from 100 nm to 300 nm and that is preferably selected from the range from 100 nm to 250 nm.

12. Heat receiver tube according to one of the previous claims, wherein the infrared light reflecting layer (13) comprises a metal that is selected from the group existing of copper, aluminum, gold and silver.

13. Method for manufacturing a heat receiver tube according to one of the claims 1 to 12, the method comprising following steps:
a) providing core tube with an uncovered core tube surface,
b) attaching the diffusion barrier layer to the uncovered core tube surface and
c) attaching the optical function layer to the diffusion barrier layer.

14. Method according to claim 13, wherein for the attaching the diffusion barrier layer and/or for the attaching the optical function layer a thin film deposition technique is used.

15. Method according to claim 14, wherein the thin film deposition technique is selected from the group consisting of atomic layer deposition, chemical vapor deposition and physical vapor deposition.

16. Method according to claim 15, wherein a sputtering is used as the physical vapor deposition.

17. Method according to claim 16, wherein the sputtering is carried out with the aid of a DC or MF power supply.

18. Method according one of the claims 13 to 17, wherein for the attaching the diffusion barrier layer following further steps are carried out:
d) Attaching metallic precursor material of the inorganic matrix material to the core tube surface and
e) Converting the attached metallic precursor material into the inorganic matrix material.

19. Parabolic trough collector (1000) comprising
- at least one parabolic mirror (3) having a sunlight reflecting surface (31) for concentrating sunlight in a focal line (32)of the parabolic mirror (31); and
- at least one heat receiver tube according to one of the claims 7 to 12 that is arranged in the focal line (32) of the parabolic mirror (3).

20. Use of the parabolic trough collector (1000) according to claim 19 in a power plant for converting solar energy into electrical energy.
